# EUROPEAN PATENT APPLICATION

(11) **EP 0 738 846 A2**
(43) Date of publication of application: **23.10.1996**
(21) Application number: 96106097.7
(22) Date of filing: 18.04.1996
(51) Int. Cl.: F16H 61/38

(54) **Belt type continuously variable transmitting apparatus**

(30) Priority: 18.04.1995 JP 92710/95
(71) Applicant: AISIN AW CO., LTD., Anjo-shi Aichi-ken (JP)
(72) Inventor: Sakakibara, Shiro, Aichi-ken (JP)
(74) Representative: VOSSIUS & PARTNER

(57) **Abstract**

In order to perform reliable transmission and to reduce the fluid pressure loss a pressure regulating cam mechanism is omitted and a mechanical actuator is employed.

When relative rotation occurs between a vane 63 and a case member 61 on the basis of the action and reaction by fluid pressure acting on belt clamping means 57, drive force transmitting means 64, 68 transmit torque from the vane 63 to a sun gear 33s₂ of a primary-side planetary gear set 33 and torque from the case member 61 to a sun gear 36s₂ of a secondary-side planetary gear set 36. The torques acting on the sun gears produce relative rotation between first and second ring gears 33r₁, 33r₂, 36r₁, 36r₂. Thereby, the male screw parts 32a, 35a and female screw parts 32b, 35b of ball screws 32, 35 cooperatively connected to the corresponding ring gears rotate relatively, to convert the torques into axial forces which act on a primary pulley 9 and a secondary pulley 10 as belt clamping forces.

## Description

The present invention relates to a belt type continuously variable transmitting apparatus in which a belt cooperatively connects a primary pulley and a secondary pulley each having two sheaves and, more particularly, to a belt type continuously variable transmitting apparatus for use as a preferable continuously variable transmission (CVT) installed in a motor vehicle and, more specifically, to a speed shift operating apparatus for operating the primary pulley and the secondary pulley to vary the speed.

A continuously variable transmission incorporating a belt type continuously variable transmitting apparatus is drawing attention to improve the fuel consumption rate and driving performance.

A typical V-belt type continuously variable transmitting apparatus supplies a hydraulic piston of the secondary pulley with a fluid pressure to unfailingly provide a required transmission torque capacity of the belt, and supplies a hydraulic piston of the primary pulley with a fluid pressure required for speed shifting operation or removes the pressure therefrom, so as to adjust the balance of the belt clamping pressures of the two pulleys for torque ratio control. More specifically, in an example construction, the ratio of the area of the hydraulic piston of the secondary pulley to the area of the hydraulic piston of the primary pulley is determined to 1:2, and a line pressure is constantly applied to the secondary pulley hydraulic piston while a control pressure is supplied to the primary pulley hydraulic piston or removed therefrom by using a control valve.

Typically, a V-belt continuously variable transmitting apparatus needs to provide a predetermined belt clamping pressure in order to transmit input torque force without causing the belt to slip. In addition, for the belt to maintain a given torque ratio, that is, to maintain a predetermined input pulley effective diameter and a predetermined output pulley effective diameter, the belt clamping pressures of the two pulleys must be adjusted as follows. For positive torque transmission, that is, the drive force transmission from the primary pulley to the secondary pulley, the primary pulley requires an axial force that is larger by a predetermined amount than that for the secondary pulley. For the negative torque transmission occurring, for example, when the enginge brake is in effect, the secondary pulley requires a greater axial force than the primary pulley.

Since torque transmission is performed in the positive state for most of the time during driving, it is normally necessary to maintain a torque ratio where the primary axial force is greater than the secondary axial force. The positive torque transmission can be readily achieved by setting the secondary axial force so as to produce such a belt clamping pressure that the belt will not slip and by providing a primary axial force corresponding to the set secondary axial force. However, for the negative torque transmission occurring, for example, when the engine brake becomes effective or downshift is performed, the axial force relation needs to be reversed, that is, the secondary pulley needs a larger axial force than the primary pulley. In such a case, application of the secondary axial force set with reference to the positive torque transmission will result in slippage of the belt.

Therefore, considering the negative torque transmission, continuously variable transmitting apparatuses are designed to produce such fluid pressure as to provide relatively great secondary axial force.

Accordingly, since such a conventional belt type continuously variable transmitting apparatus is designed to constantly supply the two pulleys with belt clamping pressures greater than the required minimum levels during the positive torque transmission, the conventional apparatus needs to employ a large-capacity pump and, in addition, suffers a hydraulic pressure loss, thus reducing the transmission efficiency particularly during transmission of low torques, degrading the fuel consumption rate, and reducing the durability of the belt.

The present applicant has proposed a belt type continuously variable transmitting apparatus comprising mechanical actuators, such as ball screws, as actuators for axially moving the movable sheaves of the primary and secondary pulleys, and a pressure regulating cam mechanism for supplying each pulley with a belt clamping pressure corresponding to the torque transmitted, wherein the actuators for the primary and secondary pulleys are cooperatively interconnected by a drive force transmitting device, such as gears, and the drive force transmitting device is connected to speed shift operating means, so that speed shift is performed by relatively rotating the primary and secondary actuators.

In a V-belt type continuously variable transmitting apparatus disclosed in JP-A-6-58385, in particular, the primary and secondary mechanical actuators rotate together with the primary and secondary pulleys, and an interposed thrust bearing for bearing the pulley axial force by the shaft is caused to rotate together when no speed shifting operation is performed, in order to improve the transmission efficiency and reduce the apparatus size. In addition, a non-linear transmitting means is provided between the two mechanical actuators so that the stroking of the mechanical actuators will be in accordance with the stroking of the movable sheaves.

Since the above-described belt type continuously variable transmitting apparatus employing mechanical actuators produces belt clamping pressures corresponding to transmission torque by using the pressure regulating cam mechanism, the product variations of component parts of the drive force transmitting device may cause the pressure regulating mechanism to stroke to a large extent when the torque transmission is switched from the positive to the negative direction or the other way around. To reduce such large-extent stroke, the apparatus uses screws or the like for adjustment. However, since changes over time, such as elongation of the belt, cause the pressure regulating cam mechanism to stroke to a large extent so that the transmission torque will fluctuate and the durability and performance of the pressure regulating cam mechanism will deteriorate, the stroke adjustment of the pressure regulating cam mechanism must be performed again. Thus, the conventional art is not sufficient to achieve such a level of maintenance-free characteristic of the transmitting apparatus as to be suitable to installation in a vehicle.

Accordingly, it is an object of the present invention to provide a belt type continuously variable transmitting apparatus that uses, as belt clamping means, urging force that relatively rotates on the basis of the action and reaction to solve the problems stated above while employing mechanical actuators. This object is solved with the features of the claims.

In a construction as disclosed , when relative rotation occurs between the first member (63) and the second member (61) on the basis of the urging force, for example, fluid pressure, which acts on the belt clamping means (57), the drive force transmitting means (64, 68) transmits torque from the first member (63) to the third rotative member (33s₂) of the primary-side synchronizing means (33), and transmits torque from the second member (61) to the third rotative member (36s₁) of the secondary synchronizing means (36).

Then, in each of the primary-side and secondary-side synchronizing means (33), (36), the torque acting on the third rotative element acts in the form of the relative rotation between the first and second rotative members (33r₁, 33r₂), (36r₁, 36r₂), and relatively rotates the first member (32a, 35a) and the second member (32b, 35b) of the corresponding mechanical actuator (32), (35) which respectively cooperate with the first and second rotative elements, so as to transform into axial force, which acts on the primary pulley (9) or the secondary pulley (10) as belt clamping pressure. Thus, by providing the belt clamping means (57) with a predetermined urging force determined by the torque ratio and the input torque, that is, the transmission torque capacity of the belt type continuously variable transmitting apparatus (7), the primary and secondary pulleys receive axial forces (belt clamping pressures) corresponding to the aforementioned transmission torque capacity.

The non-linear drive force transmitting means (83, 90) disposed in the drive force transmitting means can correct the proportion of the belt clamping pressure of the primary pulley (9) and the belt clamping pressure of the secondary pulley (10), which varies depending on the torque ratio, so as to reduce the belt clamping pressure for the torque ratios that frequently occur.

In addition, by setting the drive force transmitting means so that the rotational speed ratio toward the primary side becomes larger than that toward the secondary side, the primary pulley (9) will receive a greater axial force than the secondary pulley (10), thus achieving axial forces required by the individual pulleys for the positive torque transmission which occurs in most driving conditions of a vehicle.

Further, the third rotative elements of the primary-side and secondary-side synchronizing means (33), (36) are rotated by using the speed shift operating means (59) formed by, for example, a vane-type oscillating actuator, a piston ball screw-type oscillating actuator or an electric motor, so as to vary the axial forces of the mechanical actuators (32), (35), change the belt effective diameters of the primary pulley (9) and the secondary pulley (10), and maintain the belt effective diameters that achieve the torque ratio corresponding to the difference between the axial forces.

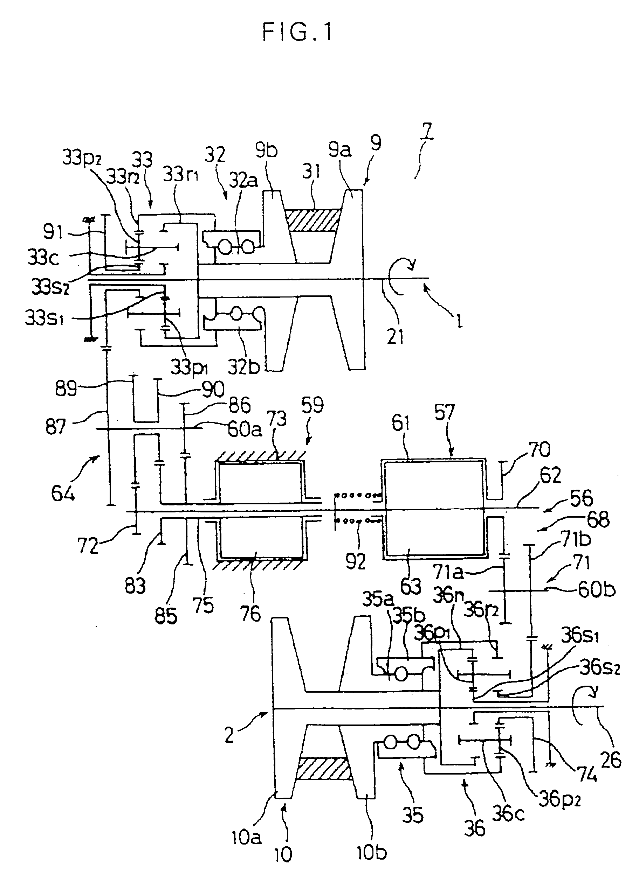

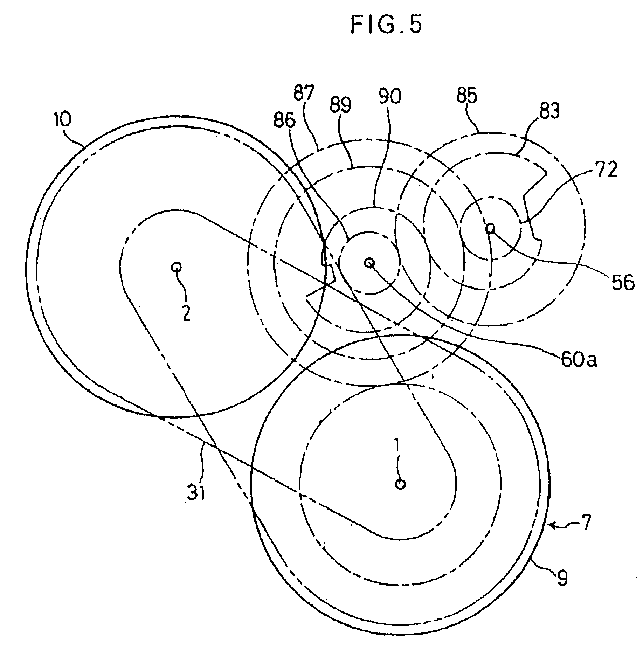

The characters provided in the above parentheses refer to the drawings (particularly, Figs. 1-7) and do not limit the scope of the invention.

Since the urging force acting on the belt clamping means causes the first member and the second member to relatively rotate on the basis of the action and reaction so that the torque of the first and second members will respectively act on the primary pulley and the secondary pulley in the form of the belt clamping pressures, the apparatus of the invention constantly applies belt clamping pressures corresponding to the transmission torque capacity without requiring a pressure regulating cam mechanism although it employs the mechanical actuators. Thereby, the apparatus constantly transmits drive force without a failure not only when torque transmission is conducted in the positive direction but also when torque transmission is conducted in the negative direction or switched over. In addition, the apparatus prevents excessively large clamping pressure from acting on the belt and thus increases the durability of the belt. Furthermore, the apparatus eliminates the need to perform stroke adjustment, which is needed for the conventional pressure regulating cam mechanism, thus enabling achievement of the maintenance-free characteristic suitable for vehicle installation.

The required urging force, for example, fluid pressure or electromagnetic force, acting on the belt clamping means is present in an amount corresponding to the transmission torque capacity. Since the force is relatively small and applied to the primary and secondary pulleys by the relative rotation of the first and second members in the same direction based on the action and reaction, the required amount of relative rotation of the first and second members is small.

In addition, since the belt clamping forces required for drive force transmission are provided by the belt clamping means without a failure, the speed shift operating means need only add an axial force to or subtract an axial force from the belt clamping forces acting on the primary and secondary pulleys, thus requiring a relatively small operating force.

Therefore, if fluid pressure is used, the apparatus will reduce the fluid pressure loss so as to allow employment of a small-capacity oil pump, and will improve the transmission efficiency so as to improve fuel consumption rate. Further, if electromagnetic force is used, the apparatus can also have a relatively simple and small-size construction including a driver.

In addition, in the case where the rotational speed ratio of the drive force transmitting means for transmission from the belt clamping means to the primary side is set larger than the rotational speed ratio of the drive force transmitting means for transmission from the belt clamping means to the secondary side, the axial force on the primary pulley will become greater than the axial force on the secondary pulley in accordance with the axial forces required by the individual pulleys during the positive torque transmission, that is, the normal drive force transmission. Thereby, the operating force needed for the speed shift operating means to shift speed or maintain a constant speed can be further reduced so that the required capacity of the speed shift operating means can be reduced.

Furthermore, the non-linear drive force transmitting means disposed in the drive force transmitting means will reduce the required urging force of the belt clamping means on the primary and secondary pulleys for torque ratios which frequently occur. In addition, the non-linear drive force transmitting means will further reduce the operating force needed for the speed shift operating means to shift speed or maintain a constant speed so that the required capacity of the speed shift operating means can be reduced.

Embodiments of the present invention will be described hereinafter with reference to the drawings.

Fig. 1 is a skeleton diagram illustrating an embodiment of the present invention.

Fig. 2 is a sectional view of a continuously variable transmission employing a belt type continuously variable transmitting apparatus according to the invention.

Fig. 3 is a sectional view illustrating the belt type continuously variable transmitting apparatus according to the embodiment.

Fig. 4 is a sectional view illustrating the relation among the various shafts of the continuously variable transmission.

Fig. 5 is a side view illustrating the relation among the various shafts of the belt type continuously variable transmitting apparatus.

Figs. 6(a) and 6(b) show a longitudinal section and a cross section, respectively, of an oil pressure coupling according to the invention.

Figs. 7(a) and 7(b) show a longitudinal section and a cross section, respectively, of a speed shifting motor according to the invention.

Fig. 8 is a skeleton diagram of an embodiment wherein the belt type continuously variable transmitting apparatus is partially modified.

Fig. 9 is a skeleton diagram of an embodiment wherein the belt type continuously variable transmitting apparatus is partially modified.

Fig. 10 is a skeleton diagram of an embodiment wherein the belt type continuously variable transmitting apparatus is partially modified.

Fig. 11 is a skeleton diagram of an embodiment wherein the belt type continuously variable transmitting apparatus is partially modified.

Fig. 12 is a skeleton diagram of an embodiment wherein the belt type continuously variable transmitting apparatus is partially modified.

Fig. 13 is an elevational sectional view of another embodiment of the oil pressure coupling and speed shifting motor.

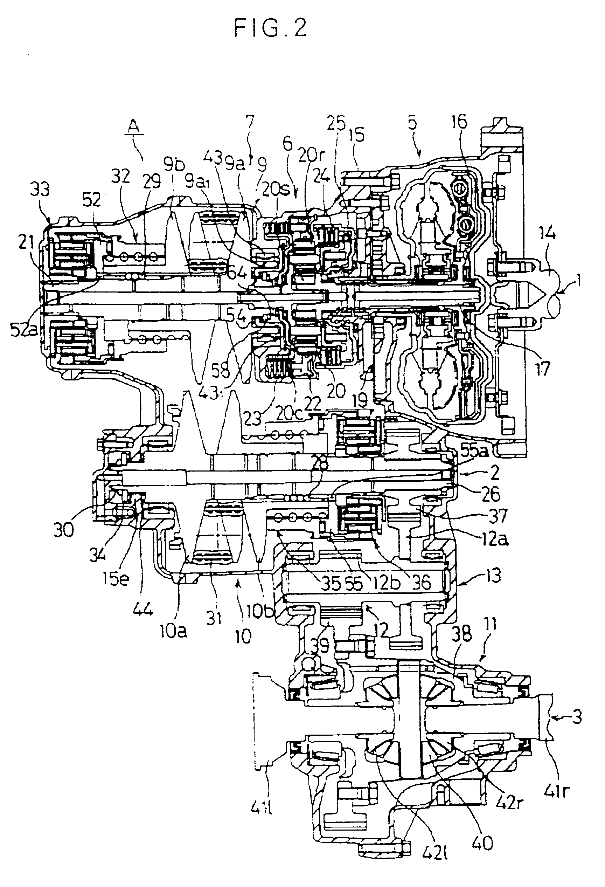

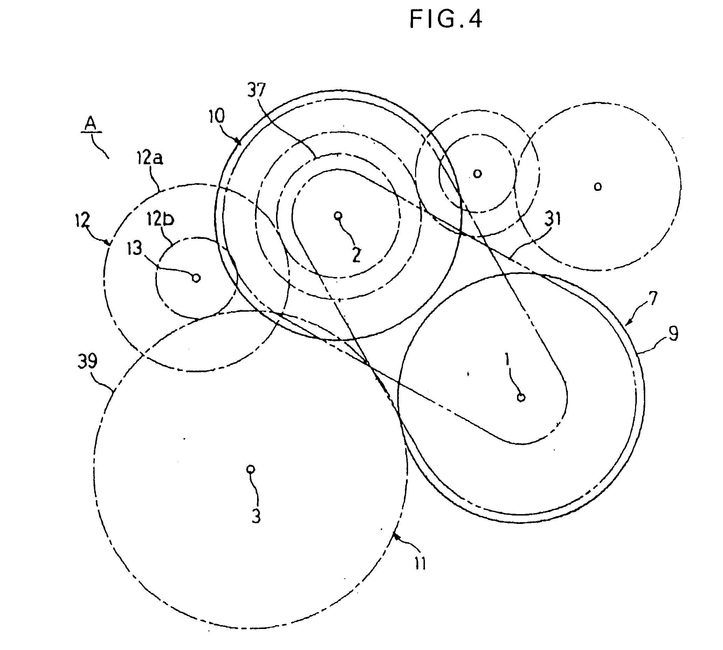

Referring to Figs. 2 and 4, a vehicle-installed automatic continuously variable transmission A has a first shaft 1 and a second shaft 2 which are aligned with respect to the output shaft of an engine and a third axis 3 aligned with a front axle, and can be applied to an FF (front-engine, front wheel-drive) vehicle of transverse engine mount. Arranged on the first shaft 1 are a torque converter 5, a forward-reverse drive switching device 6 and a primary pulley 9 of a belt type continuously variable transmitting apparatus 7. The second shaft 2 is provided with a secondary pulley 10 of the belt type continuously variable transmitting apparatus 7. The third shaft 3 is provided with a differential device 11. A fourth shaft 13 provided with a speed reducing gear mechanism 12 is interposed between the second shaft 2 and the third shaft 3. The continuously variable transmission 1 is housed in a case 15 that is separable into a plurality of pieces.

The torque converter 5 has a lockup clutch 16 and is connected at its pump impeller to the engine output shaft 14 and at its turbine runner to an output shaft 17 of the forward-reverse drive switching device 6. An oil pump 19 is disposed in a casing partition wall portion between the torque converter 5 and the forward-reverse drive switching device 6.

The front-reverse drive switching device 6 has a double pinion planetary gear set 20 comprising a sun gear 20s, a ring gear 20r, and a carrier 20c supporting a double pinion meshed with the sun and ring gears 20s, 20r. The sun gear 20s is connected to the input shaft 17. The carrier 20c, serving as an output member, is connected to a primary shaft 21 of the belt type continuously variable transmitting apparatus 7 described later. The ring gear 20r is engaged and released by a reverse brake 23 that is operated by a hydraulic actuator 22. A direct clutch 24 operable by a hydraulic actuator 25 is interposed between the input shaft 17 and the carrier 20c.

In the thus-arranged front-reverse drive switching device 6, the rotation of the input shaft 17 is extracted from the carrier 20c by direct coupling when the direct clutch 24 is engaged and the reverse brake 23 is released. When the direct clutch 24 is released and the reverse brake 23 is engaged, the rotation of the sun gear 20s is reversely extracted from the carrier 20c.

The belt type continuously variable transmitting apparatus 7 has the primary shaft 21 forming the first shaft 1 and a secondary shaft 26 forming the second shaft 2. Provided on the primary shaft 21 is the primary pulley 9 generally composed of a stationary sheave 9a integrated with the shaft 21 and a movable sheave 9b connected to the shaft 21 by a ball spline 29 so as to be movable in an axial direction. Provided on the secondary shaft 26 is the secondary pulley 10 generally composed of a stationary sheave 10a integrated with the shaft 26 and a movable sheave 10b connected to the shaft 26 by a ball spline 28 so as to be movable in an axial direction. The pulleys 9, 10 are interconnected by a metal belt 31.

Further, a ball screw 32 forming the primary-side mechanical actuator and a planetary gear set 33 forming the primary-side synchronizing means are arranged behind the movable sheave 9b of the primary pulley 9. A ball screw 35 forming the secondary-side mechanical actuator and a planetary gear set 36 forming the secondary-side synchronizing means are arranged behind the movable sheave 10b of the secondary pulley 10. The ball screws, the planetary gear sets and the cooperative connections therebetween will be described later in detail.

A small gear 37 is fixed to a front end (closer to the engine) of the secondary shaft 26 forming the second shaft 2. The small gear 37 is meshed with a large gear 12a of the speed reducing gear mechanism 12. A small gear 12b of the speed reducing gear mechanism 12 is meshed with a ring gear 39 fixed to a differential case 38 of the differential device 11. A pair of differential gears 40 is connected to the differential case 38 by a shaft. The differential gears 40, 40 are meshed with right and left-side sun gears 42l, 42r connected to the right and left front axles 41l, 41r, respectively.

The belt type continuously variable transmitting apparatus 7 according to the invention will now be described in detail with reference to Figs. 1, 3 and 5.

The primary shaft 21 is rotatably connected to the case 15 by a roller bearing 43 and a needle bearing 45. The secondary shaft 26 is rotatably connected at its opposite end portions to the case 15 by roller bearings 46, 47. Each of the primary-side and secondary-side ball screws 32, 35 is generally composed of a male screw part 32b, 35b fixed to the movable sheave 9b, 10b and a female screw part 32b, 35b engaged to the male screw part 32a, 35a in the manner of a screw by means of balls. The female screw parts 32b, 35b abut flanges 52, 55 by intervention of thrust bearings 49, 50, respectively. The flanges 52, 55 are fixed to the shafts 21, 26 by nuts 58, 58, respectively.

The primary-side planetary gear set 33 is a double line planetary gear set comprising two sun gears 33s₁, 33s₂, two ring gears 33r₁, 33r₂, and a plurality of pinions 33p₁, 33p₂ supported by a single carrier 33c and meshed with the sun gears 33s₁, 33s₂ and the ring gears 33r₁, 33r₂, respectively. A first sun gear 33s₁ is spline-connected to the case 15 by a spline-fitted connecting member 48, so that rotation of the first sun gear 33s₁ is restricted. A second ring gear 33r₂ is spline-connected to the female screw part 32b of the ball screw by a spline-fitted drum 51. The first ring gear 33r₁ is spline-connected to the male screw part 32a by the flange 52, a roller key 52a and the primary shaft 21 that are spline-fitted and the spline fitting of the ball spline 29 (see Fig. 2). The carrier 33c is freely rotatably supported.

Similarly, the secondary-side planetary gear set 36 is a double line planetary gear set comprising two sun gears 36s₁, 36s₂, two ring gears 36r₁, 36r₂, and a plurality of pinions 36p₁, 36p₂ supported by a single carrier 36c and meshed with the sun gears 36s₁, 36s₂ and the ring gears 36r₁, 36r₂, respectively. A first sun gear 36s₁ is spline-connected to the case 15 by a spline-fitted connecting member 54, so that rotation of the first sun gear 36s₁ is restricted. A second ring gear 36r₂ is spline-connected to the female screw part 35b of the ball screw by a spline-fitted drum 53. The first ring gear 36r₁ is spline-connected to the male screw part 35a by the flange 55, a roller key 55a and the secondary shaft 26 that are spline-fitted and the spline fitting of the ball spline 28 (see Fig. 2). The carrier 36c is freely rotatably supported.

An annular collar 9a₁ is provided behind the stationary sheave 9a formed together with a base end of the primary shaft 21, as shown in Fig. 2. The roller bearing 43 is disposed between the case 15 and the outer peripheral surface of the collar and stopped by a snap ring and an end plate 43₁. An end portion of the end plate 43₁ is bent and extends toward a space defined by the inner periphery of the collar 9a₁. A thrust bearing 54 and a race 58 are arranged so as to clamp the end portion of the end plate 43₁. A nut 64 is screwed to a base end of the shaft 21 to fix the primary shaft 21 in position with respect to the axial direction. A nut 30 is screwed to a rear end of the secondary shaft 26 formed together or rigidly connected to the stationary sheave 10a of the secondary pulley 10. The nut 30 is screwed between a race 34 and a thrust bearing 44 provided on an end portion of the rear surface of the stationary sheave in such a manner as to clamp an annular protrusion 15e provided in the case 15, thereby fixing the secondary shaft 26 in position with respect to the axial direction.

A fifth shaft 56 is disposed to connect the primary-side and secondary-side planetary gear sets 33, 36. Arranged on the fifth shaft 56 are an oil pressure coupling 57 forming the belt clamping means and a speed shifting motor 59 forming the speed shift operating means. Sixth shafts 60a, 60b each having a single axis are provided between the fifth shaft and the first shaft and between the fifth shaft and the second shaft. The sixth shafts 60a, 60b are disposed at the opposite ends with respect to the right-to-left directions.

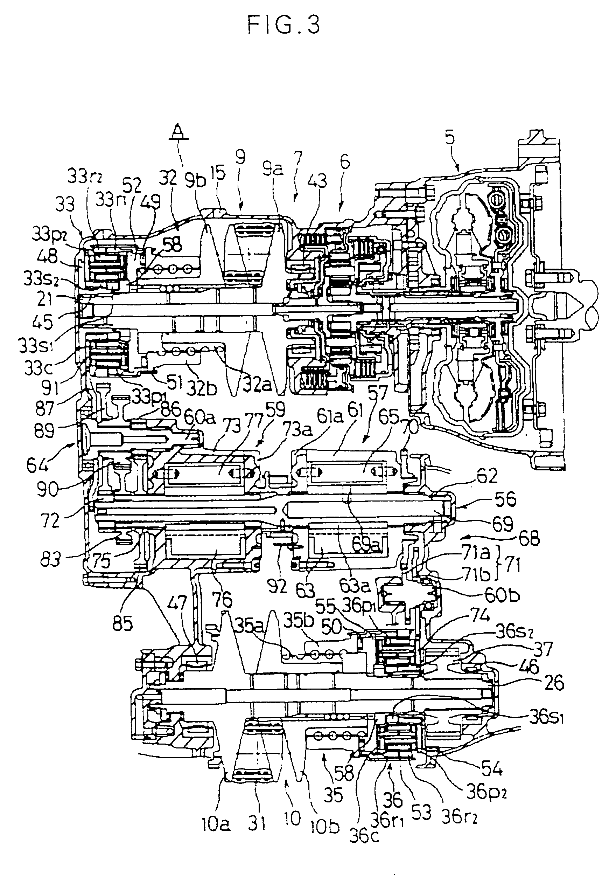

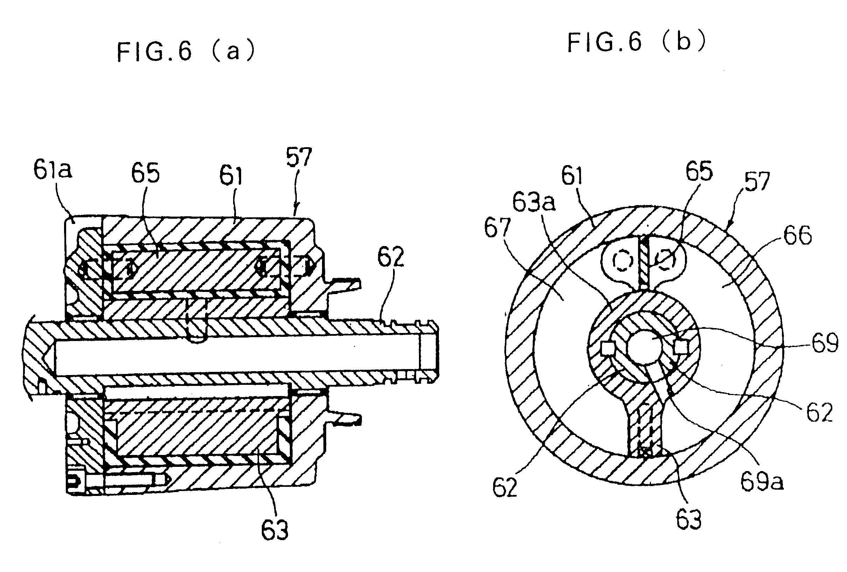

The oil pressure coupling 57 is formed of a vane type oscillating actuator as shown in Figs. 3, 6(a), 6(b). A counter shaft 62 extends through a case member 61 closed by a lid member 61a. A boss 63a of a vane 63 is fixed to the shaft 62. A partition member 65 is fixed to the case member 61. The vane 63 and the partition member 65 divide the inner space of the case 61 in an oil-tight manner. One of the divisions forms a hydraulic chamber 66 and the other division forms an air chamber 67 communicating with the outside air. The hydraulic chamber 66 is supplied with a predetermined fluid pressure from a regulator valve (not shown) corresponding to the transmission torque capacity, through a fluid passage 69 and a communicating passage 69a that are formed in the counter shaft 62.

The case member 61 is freely rotatably supported by the counter shaft 62 and firmly connected at an end thereof to a gear 70 by splines. The gear 70 is meshed with a small gear 71a of a speed reducing gear unit 71 forming one of the sixth shafts 60b. A large gear 71b of the gear unit is meshed with a thin gear 74 connected to the second sun gear 36s₂ of the secondary-side planetary gear 36. These gears constitute the secondary-side drive force transmitting means 68. The counter shaft 62 is freely rotatably supported by the case member 61. A second end portion of the shaft 62 extends through the speed shifting motor 59 and is firmly connected at its end to a small gear 72.

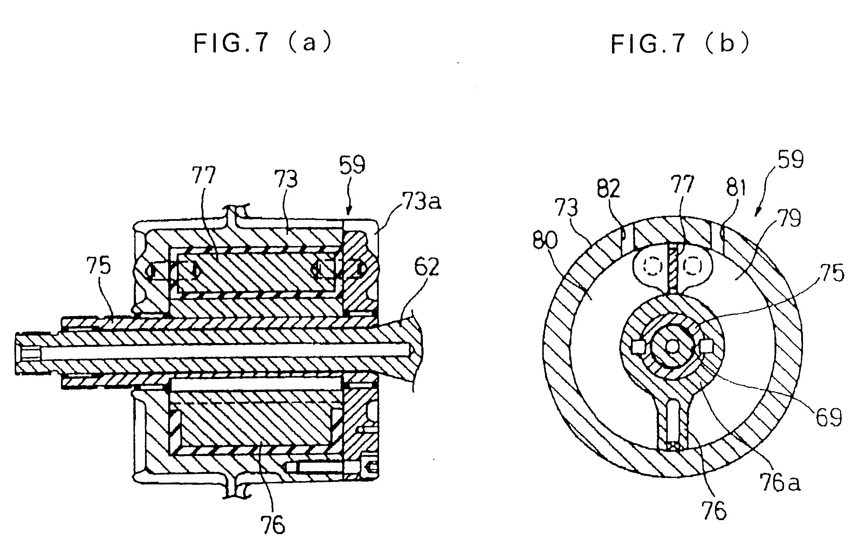

The speed shifting motor 59 is formed of a vane type oscillating hydraulic actuator as in the oil pressure coupling, as shown in Figs. 3, 7(a), 7(b). The actuator comprises a case member 73 closed by a lid member 73a, a sleeve shaft 75, a vane 76 firmly connected at its boss portion 76a to the sleeve shaft 75, and a partition member 77 fixed to the case member 73. The partition member 77 and the vane 76 divide the inner space of the case member 73 into a first fluid chamber 79 and a second fluid chamber 80. Predetermined fluid pressure from a changeover valve (not shown) is supplied to the first and second fluid chambers 79, 80 or removed therefrom, through fluid passages 81, 82, respectively, formed in the case member 73.

The case member 73 is formed integrally with the case 15. The case member 7 freely rotatably supports the sleeve shaft 75. The counter shaft 62 extends through and is freely rotatably supported by the sleeve shaft 75. The sleeve shaft 75 is firmly connected to a non-circular gear 83 and a (circular) large gear 85. The shaft 60a forming one of the sixth shafts is firmly connected to a small gear 86 and a large gear 87. The shaft 60a also supports a gear unit comprising a (circular) large gear 89 and a non-circular gear 90, in a freely rotatable manner. The small gear 72 fixed to the counter shaft 62 is meshed with the large gear 89 of the gear unit. The non-circular gears 83, 90 are meshed with each other. The large gear 85 fixed to the sleeve shaft 75 is meshed with the small gear 86 fixed to the shaft 60a, and the large gear 87 is meshed with a thin gear 91 connected to the second sun gear 33s₂ of the primary-side planetary gear set 33. These gears constitute the primary-side drive transmitting means 64.

A torsion spring 92 is provided between the counter shaft 62 and the case member (lid member) 61 of the oil pressure coupling 57 so as to produce a predetermined rewinding force. The spring 92 applies a predetermined pre-load to the oil pressure coupling 57. The gear ratios are determined such that the rotational speed of the gear train cooperatively connecting the case member 61 of the oil pressure coupling 57 to the secondary-side planetary gear set 36 is greater than the rotational speed of the gear train cooperatively connecting the counter shaft 62 of the coupling to the primary-side planetary gear set 33. Thereby, the belt clamping pressure of the primary-side pulley 9 becomes greater than the belt clamping pressure of the secondary-side pulley 10.

The operation of the embodiment described above will be described.

The rotation of the engine output shaft 14 is transmitted to the input shaft 17 by the lockup clutch 16 or the fluid of the torque converter. The rotation of the input shaft 17 is transmitted to the belt type continuously variable transmitting apparatus 7 by the forward-reverse drive switching device 6 selecting the direct coupling, the forward drive or the reverse drive. The combination of the forward-reverse drive switching device 6 and the belt type continuously variable transmitting apparatus 7 provides a continuously variable transmission range in the forward and reverse directions. The rotation thereby speed-changed is transmitted to the differential device 11 by the gear 37 and the speed reducing gear mechanism 12, and then transmitted therefrom to the right and left front wheels 41l, 41r.

The operation of the belt type continuously variable transmitting apparatus 7 will now be described.

A predetermined fluid pressure corresponding to the transmission torque capacity of the belt type continuously variable transmitting apparatus, that is, a predetermined fluid pressure determined by the torque ratio of the continuously variable transmitting apparatus and the input torque, is supplied from the output port of the regulator valve to the hydraulic chamber 66 of the oil pressure coupling 57, via the fluid passages 69, 69a. The predetermined fluid pressure supplied into the hydraulic chamber 66 acts on the vane 63 and the partition member 65 in the manner of action and reaction, and the counter shaft 62 connected to the vane 63 and the case member 61 connected to the partition member 65 serve as relatively opposite-direction torque.

The torque acting on the case member 61 is transmitted to the second sun gear 36s₂ of the secondary-side planetary gear set 36, by the gear 70, the speed reducing gear 71 and the thin gear 74. On the other hand, the torque acting on the counter shaft 62 acts on the second sun gear 33s₂ of the primary-side planetary gear set 33, transmitted by the small gear 72, the large gear 89, the non-circular gears 90, 83, the large gear 85, the small gear 86, the large gear 87 and the thin gear 91.

Since the sun gears 33s₁, 36s₁ of the planetary gear sets 33, 36 are connected to the case 15 so that rotation thereof is restricted, the carriers 33c, 36c rotate so that the first and second ring gears 33r₁, 33r₂, 36r₁, 36r₂ relatively rotate in accordance with the amounts of rotation of the second sun gears 33s₂, 36s₂. Thereby, the male screw parts 32a, 35a and the female screw parts 32b, 35b connected to the corresponding one of the first and second ring gears are relatively rotated to produce axial force in such a direction that the movable sheaves 9b, 10b of the primary and secondary pulleys approach the stationary sheaves 9a, 10a, respectively.

Thus, the predetermined fluid pressure applied to the hydraulic chamber 66 of the oil pressure coupling 57 acts, in the manner of action and reaction, as an axial force to cause the primary pulley 9 and the secondary pulley 10 to clamp (pressure) the belt 31. Since it has been designed that the rotational speed transmitted from the coupling 57 to the primary side by the counter shaft 62 is greater than the rotational speed transmitted therefrom to the secondary side by the case member 61, the axial force on the primary pulley 9 becomes greater than the axial force on the secondary pulley 10. As the vehicular continuously variable transmission A normally transmits drive force from the engine toward the wheels, that is, the positive torque transmission, the primary pulley 9 normally needs a larger belt clamping force than the secondary pulley 10. This arrangement allows a reduction of the capacity of the speed shifting motor 59 described later.

Furthermore, the proportion between the belt clamping forces required by the primary pulley 9 and the secondary pulley 10 varies depending on the torque ratio (transmission ratio). Therefore, the non-circular gears 83, 90 are interposed in the gear train from the counter shaft 62 to the primary-side planetary gear set 33 to produce gear ratio changes such that fluctuation by the torque ratio will be corrected. Thereby, the torque caused by the fluid pressure in the oil pressure coupling 57 can be distributed to the primary-side and the secondary-side in an appropriate portion corresponding to the torque ratio, so that belt clamping pressures corresponding to the torque ratio will be respectively applied to the primary pulley 9 and the secondary pulley 10. This arrangement allows a further reduction of the speed shifting motor 59 described above.

The speed shift operation by the speed shifting motor 59 of the belt type continuously variable transmitting apparatus 7 will be described.

The torque ratio of the belt type continuously variable transmitting apparatus 7 is determined by a proportion between the axial forces acting on the primary pulley 9 and the secondary pulley 10. Therefore, the belt type continuously variable transmitting apparatus 7 shifts to a predetermined torque ratio or maintains the transmission ratio by the torque from the speed shifting motor 59 being added to or subtracted from the torque based on the oil pressure coupling 57 so that the resultant torques acts on the primary-side and the secondary side.

For upshift during the positive torque transmission, the speed shifting motor 59 is rendered into a positive torque state at a first predetermined value or greater. Therefore, control is performed so that the fluid pressure supplied from the fluid passage 81 of the speed shifting motor 59 to the first hydraulic chamber 79 becomes higher by at least a predetermined value than the fluid pressure supplied (or drained) from the fluid passage 82 to the second hydraulic chamber 80. Then, the torque based on the fluid pressure difference described above acts on the vane 76 so as to apply a positive-direction torque to the second sun gear 33s₂ of the primary-side planetary gear set 33 by way of the large gear 85, the small gear 86, the shaft 60a, the large gear 87 and the thin gear 91. Thus, by the belt clamping pressure corresponding to the transmission torque capacity accordingly increased from the torque capacity based on the oil pressure coupling 57 described above, the ball screw 32 produces an axial force in such a direction that the movable sheave 9b approaches the stationary sheave 9a.

In this state, the belt type continuously variable transmitting apparatus 7 operates so that the effective diameter of the primary pulley 9 increases and the effective diameter of the secondary pulley 10 decreases, thus operating toward upshift. Then, at a predetermined torque ratio, balance is achieved between the axial forces on the primary pulley 9 and the secondary pulley 10 based on the torque from the speed shifting motor 59 and the torque from the coupling 57. The predetermined torque ratio is thus maintained.

For downshift during the positive torque transmission, the speed shifting motor 59 is rendered into the negative torque state or the positive torque state at the first predetermined value or less. Therefore, control is performed so that the fluid pressure supplied from the fluid passage 81 Of the speed shifting motor 59 to the first hydraulic chamber 79 becomes higher by at most a predetermined value or lower than the fluid pressure supplied (or drained) from the fluid passage 82 to the second hydraulic chamber 80. Then, if the speed shifting motor 59 is in the positive torque state, the torque based on the fluid pressure difference described above acts on the vane 76 so as to apply a positive-direction torque to the second sun gear 33s₂ of the primary-side planetary gear set 33 by way of the large gear 85, the small gear 86, the shaft 60a, the large gear 87 and the thin gear 91. Thus, by the belt clamping pressure corresponding to the transmission torque capacity accordingly increased from the torque capacity based on the oil pressure coupling 57 described above, the ball screw 32 produces an axial force in such a direction that the movable sheave 9b approaches the stationary sheave 9a. On the other hand, if the speed shifting motor 59 is in the negative torque state, the torque based on the fluid pressure difference described above acts on the vane 76 so as to apply a negative-direction torque to the vane 63 of the oil pressure coupling 57 by way of the non-circular gears 83, 90, the gears 89, 72 and the counter shaft 62. Thus, by the belt clamping pressure corresponding to the transmission torque capacity accordingly decreased from the torque capacity based on the oil pressure coupling 57 described above, the ball screw 32 produces an axial force in such a direction that the movable sheave 9b approaches the stationary sheave 9a.

In these states, the belt type continuously variable transmitting apparatus 7 operates so that the effective diameter of the primary pulley 9 decreases and the effective diameter of the secondary pulley 10 increases, thus operating toward downshift. Then, at a predetermined torque ratio, balance is achieved between the axial forces on the primary pulley 9 and the secondary pulley 10 based on the torque from the speed shifting motor 59 and the torque from the coupling 57. The predetermined torque ratio is thus maintained.

For upshift during the negative torque transmission, the speed shifting motor 59 is rendered into the negative torque state at a second predetermined value or greater or the positive torque state. Therefore, control is performed so that the fluid pressure supplied from the fluid passage 81 of the speed shifting motor 59 to the first hydraulic chamber 79 becomes lower by at most a predetermined value or higher than the fluid pressure supplied (or drained) from the fluid passage 82 to the second hydraulic chamber 80. Then, if the speed shifting motor 59 is in the positive torque state, the torque based on the fluid pressure difference described above acts on the vane 76 so as to apply a positive-direction torque to the second sun gear 33s₂ of the primary-side planetary gear set 33 by way of the large gear 85, the small gear 86, the shaft 60a, the large gear 87 and the thin gear 91. Thus, by the belt clamping pressure corresponding to the transmission torque capacity accordingly increased from the torque capacity based on the oil pressure coupling 57 described above, the ball screw 32 produces an axial force in such a direction that the movable sheave 9b approaches the stationary sheave 9a. On the other hand, if the speed shifting motor 59 is in the negative torque state, the torque based on the fluid pressure difference described above acts on the vane 76 so as to apply a negative-direction torque to the vane 63 of the oil pressure coupling 57 by way of the non-circular gears 83, 90, the gears 89, 72 and the counter shaft 62. Thus, by the belt clamping pressure corresponding to the transmission torque capacity accordingly decreased from the torque capacity based on the oil pressure coupling 57 described above, the ball screw 32 produces an axial force in such a direction that the movable sheave 9b approaches the stationary sheave 9a.

In these states, the belt type continuously variable transmitting apparatus 7 operates so that the effective diameter of the primary pulley 9 increases and the effective diameter of the secondary pulley 10 decreases, thus operating toward upshift. Then, at a predetermined torque ratio, balance is achieved between the axial forces on the primary pulley 9 and the secondary pulley 10 based on the torque from the speed shifting motor 59 and the torque from the coupling 57. The predetermined torque ratio is thus maintained.

For downshift during the negative torque transmission, the speed shifting motor 59 is rendered into the negative torque state at the second predetermined value or less. Therefore, control is performed so that the fluid pressure supplied from the fluid passage 81 of the speed shifting motor 59 to the first hydraulic chamber 79 becomes lower by at least a predetermined value than the fluid pressure supplied (or drained) from the fluid passage 82 to the second hydraulic chamber 80. Then, the torque based on the fluid pressure difference described above acts on the vane 76 so as to apply a negative-direction torque to the vane 63 of the oil pressure coupling 57 by way of the non-circular gears 83, 90, the gears 89, 72 and the counter shaft 62. Thus, by the belt clamping pressure corresponding to the transmission torque capacity accordingly decreased from the torque capacity based on the oil pressure coupling 57 described above, the ball screw 32 produces an axial force in such a direction that the movable sheave 9b approaches the stationary sheave 9a.

In this state, the belt type continuously variable transmitting apparatus 7 operates so that the effective diameter of the primary pulley 9 decreases and the effective diameter of the secondary pulley 10 increases, thus operating toward downshift. Then, at a predetermined torque ratio, balance is achieved between the axial forces on the primary pulley 9 and the secondary pulley 10 based on the torque from the speed shifting motor 59 and the torque from the coupling 57. The predetermined torque ratio is thus maintained.

When the torque ratio is maintained at a constant level, the first and second sun gears 33s₁, 33s₂, 36s₁, 36s₂ of the primary-side and secondary-side planetary gears 33, 36 are fixed so that the first ring gears 33r₁, 36r₁ connected to the male screw parts 32a, 35a and the second ring gears 33r₂, 36r₂ connected to the female screw parts 32b, 35b rotate at the same rotational speed, respectively. Thus, the male and female screw parts of each of the ball screws 33, 36 rotate together with the corresponding one of the primary pulley 9 and the secondary pulley 10. As no relative rotation occurs on the bearings 49, 50, a predetermined torque ratio is maintained.

Other embodiments will be described. Portions thereof which are the same as those of the above-described embodiment are denoted by the same numerals and will not be described again.

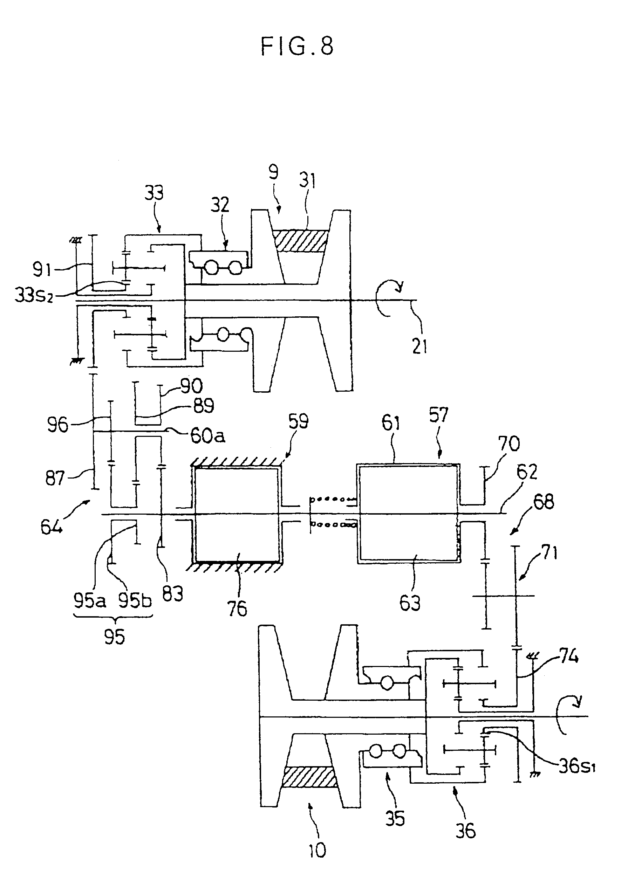

An embodiment shown in Fig. 8 is distinguished from the above-described embodiment in the gear trains of the drive force transmitting means 64, 68 for transmitting the torque from an oil pressure coupling 57 and a speed shifting motor 59 to primary and secondary-side planetary gear sets 33, 36. According to this embodiment, a vane 76 of the speed shifting motor 59 is fixed to a counter shaft 62 that is firmly connected to a vane 63 of the oil pressure coupling 57. The counter shaft 62 is firmly connected to a non-circular gear 83, and freely rotatably fitted into a gear unit 95 comprising a small gear 95a and a large gear 95b. A sixth shaft 60a is freely rotatably fitted into a gear unit comprising a non-circular gear 90 and a large gear 89, and firmly connected to a small gear 96 and a large gear 87.

In this construction, the torque from the coupling 57 that provides a belt clamping pressure for providing a required friction contact force of pulleys 9, 10 onto a belt 31 without a failure, is transmitted from the counter shaft 62 to a second sun gear 33s₂ of the primary-side planetary gear set 33 by way of the non-circular gears 83, 90, the large gear 89, the small gear 95a, the large gear 95b, the small gear 96, the large gear 87 and a thin gear 91, and is also transmitted from a case member 61 to a second sun gear 36s₂ of the secondary-side planetary gear set 36 by way of a gear 70, a speed reducing gear mechanism 71 and a thin gear 74.

Similarly, the speed shift operating torque based on the speed shifting motor 76 is transmitted from the counter shaft 62 to the primary-side planetary gear set 33 by way of the non-circular gears 83, 90, the gears 89, 95, 96, 87, 91, and also to the vane 63 of the coupling 57.

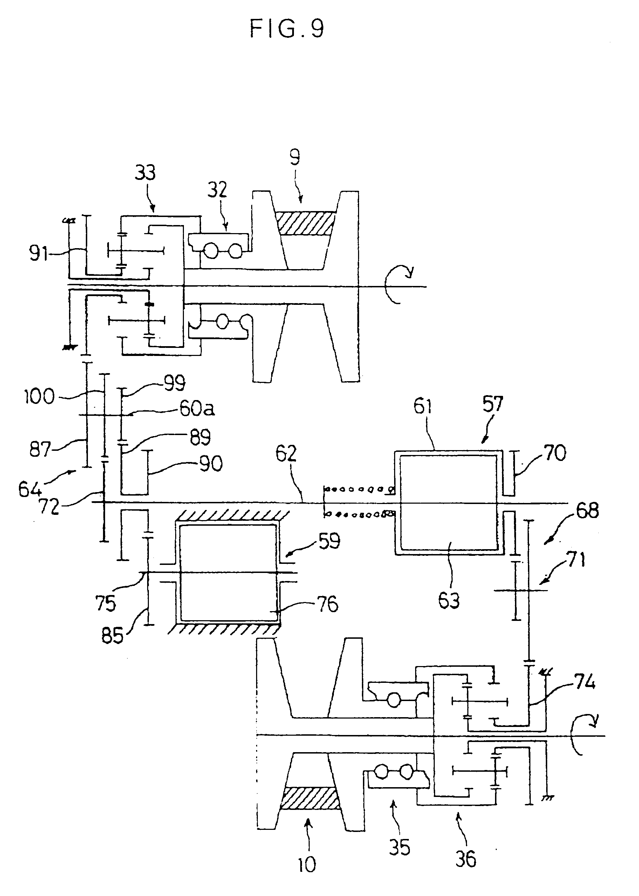

Fig. 9 shows a construction in which a speed shifting motor 59 is provided on a separate shaft (for example, a shaft aligned with respect to a sixth shaft 60a). In the speed shifting motor 59, an output shaft 75 is provided as a separate shaft, and firmly connected to a vane 76. The output shaft 75 is firmly connected to a non-circular gear 85. A counter shaft 62 is freely rotatably fitted into a gear unit comprising a non-circular gear 90 and a gear 89, and firmly connected to a gear 72. The sixth shaft 60a is firmly connected to small, medium-size and large gears 99, 100, 87, respectively.

In this construction, the torque from an oil pressure coupling 57 is transmitted from the counter shaft 62 to a primary-side planetary gear set 33 by the gears 72, 100, 87, 91, and also transmitted from a case member 61 to a secondary-side planetary gear set 36 by gears 70, 71, 74. The torque from the speed shifting motor 59 is transmitted to the primary-side planetary gear set 33 by the shaft 75, the non-circular gears 85, 90 and the gears 89, 99, 87, 91, and also transmitted to a vane 63 of the coupling 57 by the shaft 75, the non-circular gears 85, 90, the gears 89, 99, 100, 72 and the counter shaft 62.

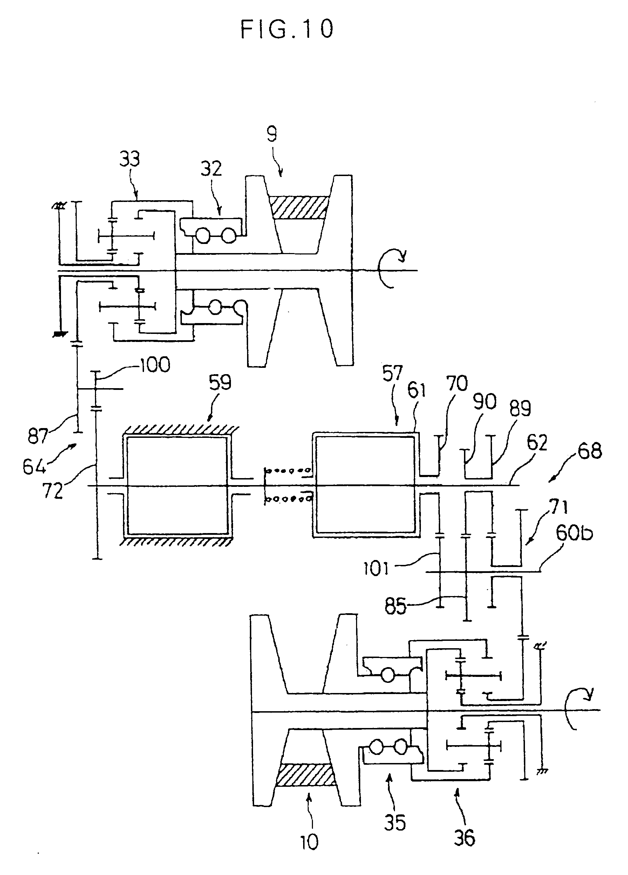

Fig. 10 shows a construction in which non-circular gears and the like are arranged in secondary-side drive force transmitting means 68. In this construction, the secondary-side portion of a counter shaft 62 is elongated, and a gear unit comprising non-circular gears 90, 89 is freely rotatably supported by the secondary-side extension of the counter shaft 62. A sixth shaft 60b is firmly connected to a gear 101 and a non-circular gear 85, and freely rotatably connected to a speed reducing gear unit 71.

In this construction, the torque from an oil pressure coupling 57 is transmitted from the counter shaft 62 to a primary-side planetary gear set 33 by gears 72, 100, 87, and also transmitted from a case member 61 to a secondary-side planetary gear set 36 by the gears 70, 101, the non-circular gears 85, 90 and the gears 89, 71. The torque from a speed shifting motor 59 is transmitted from the counter shaft 62 to the primary-side planetary gear set 33 by the gears 72, 100, 87, and to a vane 63 of the coupling 57.

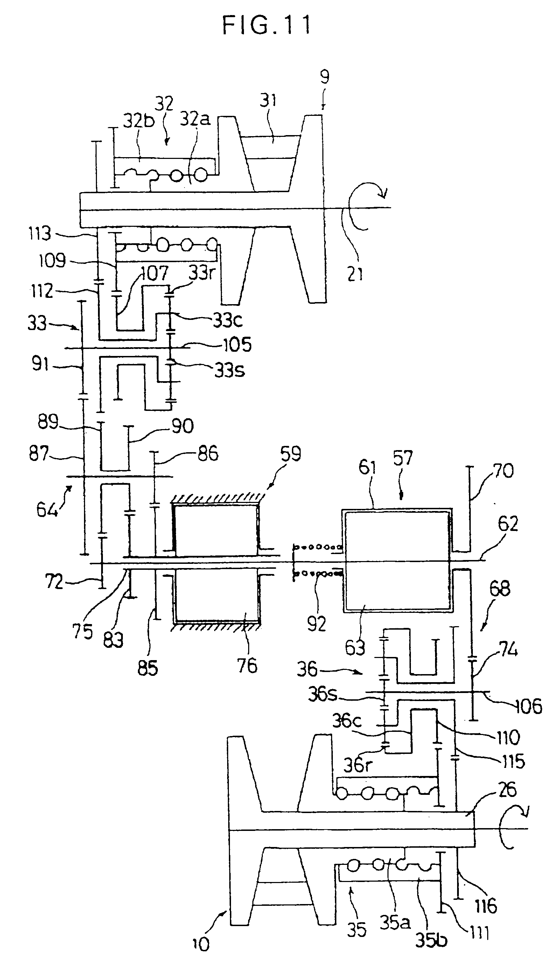

Fig. 11 shows a construction in which primary-side and secondary-side planetary gear sets 33, 36 are arranged on shafts 105, 106 separate from a primary shaft 21 and a secondary shaft 26, respectively. According to this embodiment, each of the planetary gear sets 33, 36 is formed of a single planetary gear set in which a ring gear 33r, 36r is connected to a female screw part 32b, 35b of a ball screw 32, 35 by gears 107, 109 or gears 110, 111. Carriers 33c, 36c of the planetary gear sets 33, 36 are connected to male screw parts 32a, 35a by gears 112, 113 and 115, 116, respectively. Sun gears 33s, 36s are cooperatively connected to a speed shifting motor 59 and an oil pressure coupling 57 by gear trains which are generally the same as shown in Fig. 1.

In the construction described above, the relative torque from the oil pressure coupling 57 is transmitted from a counter shaft 62 fixed to a vane 63 to the sun gear 33s of the primary-side planetary gear set 33 by gears 72, 89, non-circular gears 83, 90, gears 86, 87, 91 and the shaft 105, and also transmitted from a case member 61 to the sun gear 36s of the secondary-side planetary gear set 36 by gears 70, 74 and the shaft 106. The speed shift operating torque from a speed shifting motor 59 is transmitted to the sun gear 33s of the primary-side planetary gear set 33 by a shaft 75, the gears 85, 86, 87, 91 and the shaft 105, and also transmitted to the vane 63 of the coupling 57 by the shaft 75, the non-circular gears 83, 90, the gears 89, 72 and the counter shaft 62.

The gear ratios of the gear trains have been set so that, when the primary pulley 9 and the secondary pulley 10 are in constant speed position such that the male and female screw parts of each of the ball screws 32, 35 rotate together, the ring gears 33r, 36r and the carriers 33c, 36c of the primary-side and secondary-side planetary gears 33, 36 will rotate together, respectively. When the sun gears 33s, 36s are rotated by the torques from the oil pressure coupling 57 and the speed shifting motor 59 described above, relative rotation occurs between the ring gears 33r, 36r and the carriers 33c, 36c, respectively. Thereby, the male screw part and the female screw part of each of the ball screws 32, 35 rotate relatively to each other to change the axial force acting on the corresponding one of the pulleys 9, 10.

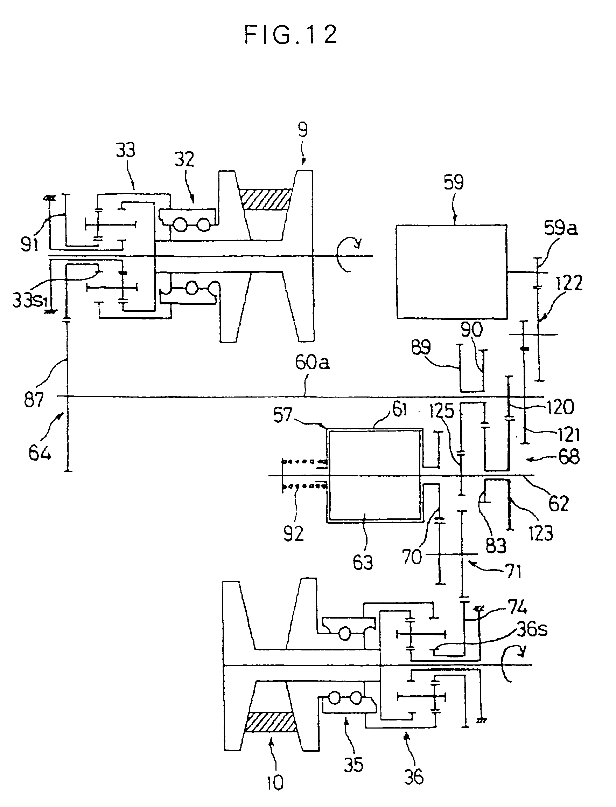

An embodiment shown in Fig. 12 is distinguished in that a speed shifting motor 59 is an electric motor and, accordingly, the gear trains are partially modified. A sixth shaft 60a is elongated to freely rotatably support a gear unit comprising a non-circular gear 90 and a gear 89. The elongated sixth shaft 60 is also connected firmly to gears 120, 121. An output gear 59a of the electric motor 59 is connected to the gear 121 by a speed reducing gear unit 122. A counter shaft 62 of an oil pressure coupling 57 freely rotatably supports a gear unit comprising a non-circular gear 83 and a gear 123 and is firmly connected to a gear 125.

In this construction, the relative torque from the oil pressure coupling 57 is transmitted from the counter shaft 62 firmly connected to a vane 63 to a primary-side planetary gear set 33 by the gears 125, 89, the non-circular gears 90, 83, the gears 123, 120, the sixth shaft 60a and gears 87, 91, and also transmitted from a case member 57 to a secondary-side planetary gear set 36 by a gear 70, a speed reducing gear unit 71 and a gear 74. The torque from the speed shifting motor 59, that is, the electric motor, is transmitted to the primary-side planetary gear set 33 by the output shaft 59a, the speed reducing gear unit 122, the gear 121, the sixth shaft 60a and the gear 87, and also transmitted to the vane 63 of the coupling 57 by the output gear 59a, the speed reducing gear unit 122, the gears 121, 120, 123, the non-circular gears 83, 90, the gears 89, 125 and the counter shaft 62.

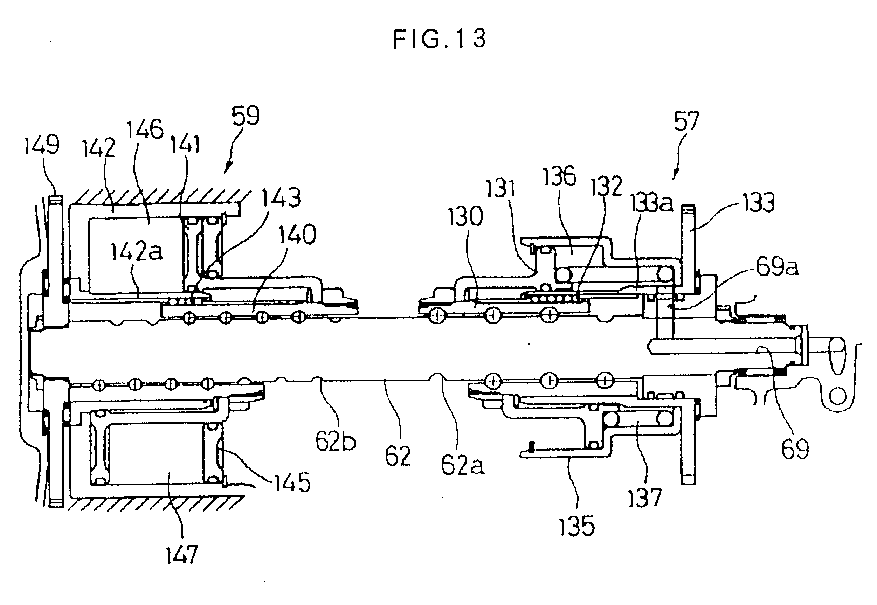

A still further embodiment of the oil pressure coupling 57 and the speed shifting motor 59 will be described with reference to Fig. 13.

In contrast to the oscillating actuators employing vanes according to the embodiments described above, the coupling and motor according to this embodiment are formed of piston ball screw oscillating actuators in which axial forces acting on a piston are converted into oscillating rotations by a ball screw. Ball screw grooves 62a, 62 are, formed in right and left portions of a counter shaft 62. The screw groove 62a provided for the coupling 57 has a relatively large pitch and is engaged with a female screw member 130 by circulating-type balls interposed therebetween. The female screw member 130 is rigidly connected to a piston 131 by a fixing member such as a screw, a snap ring or the like. The female screw member 130 also supports a boss portion 133a of a gear 133 by ball splines 132 to allow motions only in axial directions. A cylinder 135 is provided so that the cylinder 135 and the piston 131 define a hydraulic chamber 136 in which a compressed spring 137 is disposed for pulley pre-loading. The counter shaft 62 has fluid passages 69, 69a formed therein to communicate with the fluid chamber 136.

A speed shifting motor 59 has a female screw part 140 screwed to the screw groove 62b of a relatively small pitch by circulating-type balls. The female screw part 140 is rigidly connected to a piston 141 by a fixing member. The female screw part 140 is also fitted into a boss portion 142a by ball splines 143 interposed therebetween to allow motions only in axial directions. The boss portion 142a is coupled to a cylinder 142 that is fixed to a case (a fixture member). A lid member 145 is fixed in an oil-tight manner to an end opening portion of the cylinder 142 so that a first hydraulic chamber 146 and a second hydraulic chamber 147 are defined on the right and left sides of the piston 141. A gear 149 is fixed to the counter shaft 62 and sandwiched by thrust bearings disposed on its right and left sides.

According to this embodiment, a predetermined fluid pressure from a regulator valve corresponding to a belt transmission capacity is supplied to the hydraulic chamber 136 of the oil pressure coupling 57 through the fluid passages 69, 69a. Then, the piston 131 is moved in an extending direction (to the left in the drawing) together with the female screw member 130 so that by intervention of the balls, torques are produced in opposite directions on the male screw groove 62a of the counter shaft 62 and the female screw member 130. A first torque is transmitted to the primary side by the counter shaft 62 and the gear 149. The second torque is transmitted to the secondary side by the ball splines 132, the boss portion 133a and the gear 133.

The first and second hydraulic chambers 146, 147 of the speed shifting motor 59 are supplied with different fluid pressures corresponding to the torque ratio and the positive or negative torque transmission. Then, the axial force on the piston 141 based on the difference between the pressures is transmitted to the female screw part 140, which is inhibited from rotating by the boss 142a and the ball splines 143. The transmitted force acts on the male screw groove 62b as a torque in a direction corresponding to the direction of the axial force on the piston, thus applying a predetermined torque to the counter shaft 62 in the forward or reverse rotational direction.

The present invention is not limited to the embodiments described above. For example, the oil pressure coupling 57 and the speed shifting motor 59 constituted by vane oscillating hydraulic actuators are not limited to a single-vane type as shown in Figs. 6, 7, but may be of multi-vane type, such as two-vane type. A two-vane oil pressure coupling is particularly suitable for the embodiments shown in Figs. 8, 10. Furthermore, the oil pressure coupling 57 is not limited to a hydraulic type but may be of a type that produces a predetermined relative torque between the shaft arrangement and the case arrangement by using electromagnetic force provided by an armature, thereby providing the primary and secondary pulleys with axial forces corresponding to the transmission torque.

In addition, the torque transmitting means from the coupling or the speed shifting motor to the primary or secondary-side planetary gear set is not limited to gears, but any other type of drive force transmitting means, such as a chain, may be employed. The interposed non-circular gears may be omitted from the torque transmitting means. Further, the means for converting torque into axial force is not limited to a ball screw, but any other type of means can be employed, for example, a slide screw or an end face cam.

### Reference Characters

- 7.: belt type continuously variable transmitting apparatus
- 9.: primary pulley
- 9a.: stationary sheave
- 9b.: movable sheave
- 10.: secondary pulley
- 10a.: stationary sheave
- 10b.: movable sheave
- 21.: primary shaft
- 26.: secondary shaft
- 31.: belt
- 32.: primary-side mechanical actuator (ball screw)
- 32a.: first member (male screw part)
- 32b.: second member (female screw part)
- 33.: primary-side synchronizing means (planetary gear set)
- 33r₁, 33c.: first rotative element
- 33r₂, 33r.: second rotative element
- 33s₂, 33s.: third rotative element
- 35.: secondary-side mechanical actuator (ball screw)
- 35a.: first member (male screw part)
- 35b.: second member (female screw part)
- 36.: secondary-side synchronizing means (planetary gear set)
- 36r₁, 36c.: first rotative element
- 36r₂, 36r.: second rotative element
- 36s₂, 36s.: third rotative element
- 57.: belt clamping means (oil pressure coupling)
- 59.: speed shift operating means (speed shifting motor)
- 63, 62, 62a.: first member (vane, counter shaft, male screw groove)
- 61, 65, 130.: second member (case member, partition member, female screw member)
- 64, 68.: (primary-side and secondary-side) drive force transmitting means
- 83, 90.: non-linear drive force transmitting means (non-circular gear)

## Claims

1. A belt type continuously variable transmitting apparatus (7) comprising: a primary pulley and a secondary pulley (9), (10) each having two sheaves (9a, 9b), (10a, 10b) which are supported by a shaft (21), (26) and relatively movable in an axial direction; a belt (31) connecting the two pulleys; mechanical actuators (32), (35) each of which has a first member (32a), (35a) and a second member (32b), (35b) and axially moves a movable sheave (9b, 10b) of each pulley on the basis of relative rotation of the first and second members, the apparatus further comprising:
belt clamping means (57) having a first member (63) and a second member (61) which rotate in the same direction and are relatively rotatable, the belt clamping means providing a predetermined urging force such that the first and second members will relatively rotate on the basis of action and reaction;
primary-side synchronizing means (33) having at least first, second and third rotative elements, the first rotative element (33r₁) being cooperatable with the first member (32a) of a primary-side mechanical actuator (32), the second rotative element (33r₂) being cooperatable with the second member (32b) of the primary-side mechanical actuator, and the third rotative element (33s₂) being cooperatable with the first member (63) of the belt clamping means (57), so that the first and second rotative elements (33r₁ , 33r₂) rotate together while the third rotative element (33s₂) is stopped, and so that the first and second rotative elements relatively rotate on the basis of rotation of the third rotative element;
secondary-side synchronizing means (36) having at least first, second and third rotative elements, the first rotative element (36r₁) being cooperatable with the first member (35a) of a secondary-side mechanical actuator (35), the second rotative element (36r₂) being cooperatable with the second member (35b) of the secondary-side mechanical actuator (35), and the third rotative element (36s₂) being cooperatable with the second member (61) of the belt clamping means (57), so that the first and second rotative elements (36r₁ , 36r₂) rotate together while the third rotative element (36s₂) is stopped, and so that the first and second rotative elements relatively rotate on the basis of rotation of the third rotative element;
drive force transmitting means (64, 68) for cooperatively connecting the first member (63) of the belt clamping means (57) to the third member (33s₂) of the primary-side synchronizing means (33), and the second member (61) of the belt clamping means to the third member (36s₂) of the secondary-side synchronizing means (36), so that each of the mechanical actuators moves the two sheaves (9a, 9b), (10a, 10b) of the corresponding pulley in such a direction that the two sheaves come closer to each other, on the basis of relative rotation of the first and second members (63 , 61) of the belt clamping means (57); and
speed shift operating means (59) disposed in the drive force transmitting means, for providing a predetermined torque in such a manner that relative rotation will occur between the third rotative element (33s₂) of the primary-side synchronizing means and the third rotative element (36s₂) of the secondary-side synchronizing means.

2. An apparatus according to claim 1, wherein the urging force that acts on the belt clamping means (57) is fluid pressure.

3. An apparatus according to claim 1, wherein the urging force that acts on the belt clamping means is an electromagnetic force.

4. An apparatus according to claim 1, 2, or 3, wherein a non-linear drive force transmitting means (83 , 90) is provided in the drive force transmitting means (64), (68).

5. An apparatus according to any of claims 1 to 4, wherein the drive force transmitting means (64), (68)is set so that the rotational speed ratio of a portion thereof for achieving cooperative connection from the first member (63) of the belt clamping means (57) to the third rotative element (33s₂) of the primary-side synchronizing means becomes larger than the rotational speed ratio of a portion of the drive force transmitting means for achieving cooperative connection from the second member (61) of the belt clamping means to the third rotative member (36s₂) of the secondary-side synchronizing means.
